(19) Europäisches Patentamt
European Patent Office
Office européen des brevets

(11) EP 4 475 219 A1

(12) EUROPEAN PATENT APPLICATION
published in accordance with Art. 153(4) EPC

(43) Date of publication:
**11.12.2024 Bulletin 2024/50**

(21) Application number: **22925290.3**

(22) Date of filing: **09.02.2022**

(51) International Patent Classification (IPC):
***H01M 4/36*** *(2006.01)* ***H01M 10/0567*** *(2010.01)*

(52) Cooperative Patent Classification (CPC):
**H01M 4/36; H01M 4/505; H01M 10/0525; H01M 10/0567; H01M 10/0568; H01M 10/0569;** Y02E 60/10

(86) International application number:
**PCT/CN2022/075632**

(87) International publication number:
**WO 2023/150927 (17.08.2023 Gazette 2023/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dongguan Amperex Technology Limited**
**Dongguan, Guangdong 523808 (CN)**

(72) Inventors:
- **ZHENG, Yezhen**
  **Dongguan City, Guangdong 523000 (CN)**
- **ZHOU, Shaoyun**
  **Dongguan City, Guangdong 523000 (CN)**

(74) Representative: **Icosa**
**83 avenue Denfert-Rochereau**
**75014 Paris (FR)**

# (54) ELECTROCHEMICAL DEVICE AND ELECTRONIC DEVICE COMPRISING ELECTROCHEMICAL DEVICE

(57) This application provides an electrochemical device and an electronic device including the electrochemical device. The electrochemical device includes a positive electrode, a negative electrode, and an electrolyte, where the positive electrode includes a positive electrode active material layer, the positive electrode active material layer includes a positive electrode active material, the positive electrode active material includes element manganese, and the electrolyte includes a sulfur-oxygen double bond-containing compound. The electrochemical device satisfies $1 \le \ln(x/y) \le 4$, where when a voltage of the electrochemical device ranges from 3.75 V to 3.95 V, based on a mass of the positive electrode active material layer, a mass percentage of the element manganese is x%; and based on a mass of the electrolyte, a mass percentage of the sulfur double bond-containing compound is y%. The electrochemical device has good high-temperature storage performance, and also has good cycling performance and overcharge performance.

EP 4 475 219 A1

## Description

### TECHNICAL FIELD

This application relates to the electrochemical field, and specifically, to an electrochemical device and an electronic device comprising electrochemical device.

### BACKGROUND

As a new type of mobile energy storage device, secondary batteries (such as lithium-ion batteries) have been widely used in portable small electronic devices such as mobile phones, laptops, and cameras due to their high energy density, high operating voltage, long cycle life, free memory effect, and green environmental protection. They are gradually expanding to large electric transportation vehicles and renewable energy storage. With the widespread application of lithium-ion batteries in the preceding fields, people have increasingly higher requirements for the energy density and safety performance of lithium-ion batteries.

In order to further improve the safety performance of lithium-ion batteries, positive electrode active materials containing element manganese (Mn) are usually used. However, positive electrode active materials containing element manganese have the following two problems: (1) $Mn^{3+}$ in the positive electrode active materials is easily disproportionated to generate $Mn^{4+}$ and $Mn^{2+}$; and (2) $Mn^{2+}$ will dissolve into the electrolyte, resulting in irreversible capacity loss, especially at high temperatures, which will accelerate the dissolution of manganese. As a key component of lithium-ion batteries, the electrolyte has an important impact on the improvement of the preceding problems. However, if an existing electrolyte is applied to lithium-ion batteries including manganese-containing positive electrode active materials, the performance of the lithium-ion batteries will further deteriorate at high temperatures, and problems such as gas generation in high-temperature storage and gas generation during cycling may easily occur.

### SUMMARY

This application provides an electrochemical device and an electronic device including the electrochemical device so as to improve the high-temperature storage performance of the electrochemical device.

It should be noted that in the invention content of this application, an example in which a lithium-ion battery is used as an electrochemical device is used to illustrate this application. However, the electrochemical device of this application is not limited to the lithium-ion battery. Specific technical solutions are as follows:

According to a first aspect, an embodiment of this application provides an electrochemical device, including a positive electrode, a negative electrode, and an electrolyte, where the positive electrode includes a positive electrode active material layer, the positive electrode active material layer includes a positive electrode active material, the positive electrode active material includes element manganese, and the electrolyte includes a sulfur-oxygen double bond-containing compound. The electrochemical device satisfies $1 \leq \ln(x/y) \leq 4$, preferably $1.5 \leq \ln(x/y) \leq 4$. When a voltage of the electrochemical device ranges from 3.75 V to 3.95 V, based on a mass of the positive electrode active material layer, a mass percentage of the element manganese is x%; and based on a mass of the electrolyte, a mass percentage of the sulfur-oxygen double bond-containing compound is y%.

The inventors have found through extensive research that when the voltage of the electrochemical device ranges from 3.75 V to 3.95 V, the dissolution of transition metals (for example, element manganese) in the positive electrode active material is particularly significant in a high-temperature environment, leading to irreversible capacity loss of the electrochemical device and affecting other performances. The electrolyte of this application includes the sulfur-oxygen double bond-containing compound. When the voltage of the electrochemical device ranges from 3.75 V to 3.95 V, and the percentage x% of the element manganese in the positive electrode active material layer and the percentage y% of the sulfur-oxygen double bond-containing compound in the electrolyte satisfy $1 \leq \ln(x/y) \leq 4$, the sulfur-oxygen double bond-containing compound in the electrolyte can form a solid electrolyte interface (SEI) film on a surface of the negative electrode, thereby inhibiting the abnormal dissolution of the element manganese in the positive electrode active material under specific conditions, effectively protecting the negative electrode interface, enhancing the stability of the negative electrode active material in this environment, and improving the high-temperature storage performance of the electrochemical device. When the electrochemical device preferably satisfies $1.5 \leq \ln(x/y) \leq 4$, the high-temperature storage performance of the electrochemical device is better.

This application has no particular limitation on the type of the positive electrode active material, provided that the positive electrode active material includes element manganese and the objectives of this application can be achieved. For example, the positive electrode active material may include at least one of $LiMn_2O_4$, $LiNi_{0.85}Co_{0.05}Mn_{0.1}O_2$, $LiNi_{0.5}Co_{0.2}Mn_{0.3}O_2$, $LiNi_{0.5}Co_{0.3}Mn_{0.2}O_2$, or $LiNi_{0.9}Mn_{0.1}O_2$. Illustratively, the positive electrode active material may include $LiMn_2O_4$, $LiNi_{0.85}Co_{0.05}Mn_{0.1}O_2$:$LiFePO_4$:$LiMn_2O_4$=1:1:8 (mass ratio), $LiNi_{0.85}Co_{0.05}Mn_{0.1}O_2$:$LiMn_2O_4$=2:8

(mass ratio), $LiNi_{0.5}Co_{0.2}Mn_{0.302}$:$LiMn_{204}$=3:7 (mass ratio), $LiNi_{0.85}Co_{0.05}Mn_{0.1}O_2$, $LiNi_{0.5}Co_{0.3}Mn_{0.2}O_2$, or $LiNi_{0.9}Mn_{0.1}O_2$. Based on the mass of the positive electrode active material layer, when the voltage of the electrochemical device ranges from 3.75 V to 3.95 V, the mass percentage x% of the element manganese is selected from 2% to 61%. For example, when the voltage of the electrochemical device ranges from 3.75 V to 3.95 V, the mass percentage x% of the element manganese may be 2%, 2.77%, 5%, 5.7%, 5.8%, 11.7%, 20%, 36.3%, 36.7%, 36.8%, 45%, 50.8%, 51.1%, 51.3%, 51.4%, 51.6%, 57.9%, 60.3%, 60.6%, 61 %, or any one in a range defined by any two of these values.

Based on the total mass of the electrolyte, the mass percentage of the sulfur-oxygen double bond-containing compound is y%, where $y \leq 5$, preferably, $0.01 \leq y < 5$. For example, y may be 0.01, 0.2, 0.3, 0.5, 1, 1.3, 1.3, 2, 2.5, 3.5, 4.5, 5, or any one in a range defined by any two of these values. Not limited to any theory, by controlling the mass percentage of the sulfur-oxygen double bond-containing compound within the foregoing range, an SEI film of suitable thickness can be formed on the surface of the negative electrode, effectively inhibiting the damage to the negative electrode caused by the dissolution of transition metals (for example, element manganese) in the positive electrode active material, protecting the negative electrode interface, enhancing the stability of the negative electrode active material, and improving the high-temperature storage performance of the electrochemical device.

In general, the electrolyte of the electrochemical device provided in this application includes a sulfur-oxygen double bond-containing compound, and the sulfur-oxygen double bond-containing compound can form an SEI film on the surface of the negative electrode, effectively inhibiting the dissolution of transition metals (for example, element manganese) in the positive electrode active material under high-temperature conditions when the voltage of the electrochemical device ranges from 3.75 V to 3.95 V, while protecting the negative electrode interface. As a result, the high-temperature storage performance of the electrochemical device is effectively improved.

In an embodiment of this application, the positive electrode active material particles have a $D_v10$ of D μm, where D and y satisfy $1 \leq Dxy \leq 31.5$, preferably $1 \leq D \times y \leq 24$. For example, the value of $D \times y$ may be 1, 3.5, 4.8, 6.3, 7, 9.1, 12, 14, 14.7, 15.75, 17.5, 24, 24.5, 26.4, 31.5, or any one in a range defined by any two of these values. Not limited to any theory, $D_v10$ of the positive electrode active material particles affects the high-temperature storage performance of the electrochemical device. By controlling the value of $D \times y$ within the foregoing range, it is more conducive to improving the high-temperature storage performance of the electrochemical device.

This application has no particular limitation on $D_v10$ of the positive electrode active material particles, provided that the foregoing relationship is satisfied and the objectives of this application are achieved. For example, in some embodiments of this application, $D_v10$ of the positive electrode active material particles ranges from 2.3 μm to 7 μm. In this application, $D_v10$ indicates a particle size in volume-based particle size distribution, where particles size of 10% of particles is not greater than this particle size.

In an embodiment of this application, the sulfur-oxygen double bond-containing compound is selected from at least one of a compound represented by formula (I):

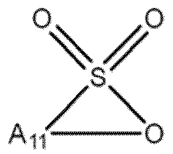

(I),

where $A_{11}$ is selected from substituted or unsubstituted $C_1$ to $C_4$ alkylene, substituted or unsubstituted $C_2$ to $C_4$ alkenylene, or substituted or unsubstituted $C_1$ to $C_6$ linear heteroalkylene, the number of heteroatoms in the linear heteroalkylene is 1 to 5, and the heteroatom in the linear heteroalkylene is selected from O, N, P, or S; and in substitution, each substituent is independently selected from a halogen atom, $C_1$ to $C_3$ alkyl, or $C_2$ to $C_4$ alkenyl.

Preferably, the sulfur-oxygen double bond-containing compound is selected from at least one of methylene methane disulfonate (MMDS), 1,3-propane sultone (PS), 1,4-butane sultone, propenyl-1,3-sultone, ethylene sulfate, 1,3-propane disulfonic anhydride, 2-methylbutane sultone, or 1,3-propylene glycol cyclic sulfate. The selection of the foregoing sulfur-oxygen double bond-containing compound is more conducive to improving the high-temperature storage performance of the electrochemical device.

In an embodiment of this application, the electrolyte further includes a lithium salt and a cyclic carbonate compound. For example, the lithium salt includes at least one of lithium hexafluorophosphate ($LiPF_6$), lithium bis(trifluoromethanesulfonyl)imide, lithium bis(fluorosulfonyl)imide, lithium bis(oxalatoborate), lithium tetrafluoroborate, lithium difluorooxalatoborate, lithium perchlorate, or lithium trifluoromethanesulfonate. Preferably, the lithium salt may include $LiPF_6$ because $LiPF_6$ can provide high ionic conductivity and improve the cycling performance of the electrochemical device. For example, the cyclic carbonate compound includes at least one of ethylene carbonate (also known as ethylene carbonate, EC for short), propylene carbonate (PC), or butylene carbonate (BC). The selection of the foregoing lithium salt

and cyclic carbonate compound is more conducive to improving the high-temperature storage performance and cycling performance of the electrochemical device.

In an embodiment of this application, based on the mass of the electrolyte, a mass percentage of the lithium salt is m%, and a mass percentage of the cyclic carbonate compound is n%.

Further, when the voltage of the electrochemical device ranges from 3.75 V to 3.95 V, the mass percentage x% of the element manganese and the mass percentage m% of the lithium salt satisfy $m/x \leq 2.5$. Preferably, $0.09 \leq m/x \leq 2.5$. For example, the value of mix may be 0.09, 0.11, 0.14, 0.15, 0.18, 0.22, 0.25, 0.5, 1, 1.5, 2, 2.29, 2.5, or any one in a range defined by any two of these values. The thermal stability of the lithium salt is poor in a high-temperature environment and is easily decomposed, leading to an increase in the acidity of the electrolyte. By controlling the value of mix within the foregoing range, it is more conducive to reducing the increase in the acidity of the electrolyte and mitigating the impact of the dissolution of transition metals in the positive electrode active material, thereby improving the high-temperature performance of the electrochemical device, such as high-temperature storage performance and high-temperature cycling performance.

Further, when the voltage of the electrochemical device ranges from 3.75 V to 3.95 V, the mass percentage x% of element manganese and the mass percentage n% of the cyclic carbonate compound satisfy $x/n \leq 6.6$. Preferably, $x/n \leq 1.9$. Preferably, $0.22 \leq x/n \leq 6.6$. For example, the value of x/n may be 0.22, 0.66, 1.41, 1.61, 1.88, 1.80, 1.82, 1.84, 1.92, 1.97, 6.6, or any one in a range defined by any two of these values. By controlling the value of x/n within the foregoing range, side reactions in the electrochemical device at 3.75 V to 3.95 V can be effectively suppressed, which is more conducive to improving the high-temperature storage performance and cycling performance of the electrochemical device.

Further, the mass percentage m% of the lithium salt and the mass percentage n% of the cyclic carbonate compound satisfy $m/n \leq 1.5$. Preferably, $0.17 \leq m/n \leq 1.5$. For example, the value of m/n may be 0.17, 0.21, 0.25, 0.29, 0.33, 0.42, 0.50, 1.00, 1.5, or any one in a range defined by any two of these values. The reduction in the mass percentage of the lithium salt in the electrolyte leads to a decrease in the ionic conductivity of the electrolyte, while the cyclic carbonate compound generally has a high dielectric constant, which can improve the ionic conductivity of the electrolyte. By controlling the value of m/n within the foregoing range, the ionic conductivity of the electrolyte can be effectively regulated, thereby improving the cycling performance of the electrochemical device.

In an embodiment of this application, the mass percentage m% of the lithium salt, the mass percentage y% of the sulfur-oxygen double bond-containing compound, and the mass percentage n% of the cyclic carbonate compound satisfy $m+y<n$. By ensuring that the mass percentages of the lithium salt, the sulfur-oxygen double bond-containing compound, and the cyclic carbonate compound satisfy the foregoing relationship, the acidity of the electrolyte is controlled, the impact of Mn2+ dissolution on the performance of the electrochemical device is mitigated, the ionic conductivity of the electrolyte is controlled, and in turn the high-temperature storage performance and cycling performance of the electrochemical device is effectively improved.

This application has no particular limitation on the mass percentage n% of the cyclic carbonate compound, provided that the objectives of this application can be achieved. For example, in some embodiments of this application, the mass percentage n% of the cyclic carbonate compound ranges from 8.7% to 36.36%.

In an embodiment of this application, the mass percentage m% of the lithium salt is $4.5<m<14$. For example, m may be 4.51, 4.76, 5, 5.88, 6.98, 9.09, 10, 11.11, 13.04, 13.99, or any one in a range defined by any two of these values. By controlling the mass percentage of the lithium salt within the foregoing range, sufficient lithium ions are provided, the acidity and ionic conductivity of the electrolyte are adjusted, the stability of the electrolyte is improved, and the high-temperature storage performance and cycling performance of the electrochemical device are effectively improved.

In an embodiment of this application, the electrolyte further includes a fluorinated carbonate compound. The fluorinated carbonate compound can further modify the SEI film on the negative electrode, and the formed SEI film is more compact and does not increase impedance. Such an SEI film can more effectively prevent further decomposition of the electrolyte, thereby improving the cycling performance of the electrochemical device.

In an embodiment of this application, the fluorinated carbonate compound includes at least one of fluoroethylene carbonate (also known as fluoroethylene carbonate, FEC), 3,3,3-trifluoropropylene carbonate, bisfluoroethylene carbonate (also known as bisfluoroethylene carbonate), 2,2,2-trifluoroethyl methyl carbonate, 2,2,2-trifluorodiethyl carbonate, or 2,2,2-trifluoroethylpropyl carbonate. Not limited to any theory, the selection of the foregoing types of fluorinated carbonate compounds is more conducive to improving the cycling performance of the electrochemical device.

In an embodiment of this application, based on the mass of the electrolyte, a mass percentage of the fluorinated carbonate compound is p%, and the electrolyte satisfies $y>0.25 \times p$.

In an embodiment of this application, based on the mass of the electrolyte, the mass percentage of the fluorinated carbonate compound is p%, and the electrolyte satisfies $y+p<0.5 \times n$.

The sulfur-oxygen double bond-containing compound, cyclic carbonate compound, and fluorinated carbonate compound can produce a synergistic effect in the electrolyte. By controlling the mass percentages of these three compounds within the foregoing relationship range, the electrolyte is more conducive to improving the cycling performance of the electrochemical device.

In an embodiment of this application, based on the mass of the electrolyte, the mass percentage of the fluorinated carbonate compound is p%, where $p<9$, preferably, $0.005 \leq p<9$. For example, the value of p may be 0.005, 0.0087, 0.43, 0.86, 1.71, 2, 3, 4.17, 5, 8.01, 8.99, or any one in a range defined by any two of these values. By controlling the value of p within the foregoing range, the SEI film on the surface of the negative electrode can be more effectively modified, further improving the cycling performance of the electrochemical device.

In an embodiment of this application, the electrolyte further includes a nitrogen-containing heterocyclic compound represented by formula (II):

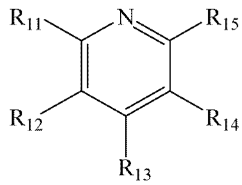

(II),

where $R_{11}$, $R_{12}$, $R_{13}$, $R_{14}$, and $R_{15}$ are each independently selected from any one of a hydrogen atom, a halogen atom, a cyano group, substituted or unsubstituted $C_1$ to $C_{10}$ alkyl, substituted or unsubstituted $C_2$ to $C_{10}$ alkenyl, substituted or unsubstituted $C_2$ to $C_{10}$ alkynyl, or substituted or unsubstituted $C_1$ to $C_{10}$ N-containing groups, and in substitution, the substituent is a halogen atom, and any two of $R_{11}$, $R_{12}$, $R_{13}$, $R_{14}$, and $R_{15}$ is capable of being bonded to form a ring structure. For example, the substituted or unsubstituted $C_1$ to $C_{10}$ N-containing groups may include substituted or unsubstituted $C_2$ to $C_{10}$ N-containing aromatic group, or substituted or unsubstituted $C_1$ to $C_{10}$ N-containing aliphatic group.

Preferably, the nitrogen-containing heterocyclic compound is selected from at least one of pyridine, 2-methylpyridine, 2-vinylpyridine, 2-ethynylpyridine, 2-fluoropyridine, 2-cyanopyridine, 3-vinylpyridine, 3-fluoropyridine, 2,6-difluoropyridine, pentafluoropyridine, 2,2'-bipyridine, terpyridine, 1,8-naphthyridine, or 5,6,7,8-tetrahydroquinoline. The nitrogen-containing heterocyclic compound can further form a polymer film on the surface of the negative electrode, effectively inhibiting the damage to the negative electrode caused by the dissolution of transition metals (for example, element manganese) from the positive electrode, thereby improving the stability of the negative electrode and effectively improving the storage performance and safety performance of the electrochemical device.

In an embodiment of this application, based on the mass of the electrolyte, a mass percentage f% of the nitrogen-containing heterocyclic compound is f%, where $f<3$, preferably, $0.005 \leq f<3$. For example, the value of f may be 0.005, 0.0087, 0.01, 0.1, 0.261, 0.3, 0.346, 0.4, 0.43, 0.5, 0.86, 1, 1.71, 2, 2.54, 2.99, or any one in a range defined by any two of these values. If the mass percentage of the nitrogen-containing heterocyclic compound is too high (for example, higher than 3%), the polymer film formed on the surface of the negative electrode is too thick, which increases the impedance, affects the transmission of lithium ions, and deteriorates the electrochemical performance (for example, cycling performance) of the electrochemical device. By controlling the value of f within the foregoing range, the impedance is reduced, the stability of the negative electrode is enhanced, and the gas generation problem of full discharge (SOC (state of charge) = 0%) storage at 60°C can be significantly alleviated, thereby improving the high-temperature storage performance and safety performance of the electrochemical device.

In an embodiment of this application, the mass percentage of the nitrogen-containing heterocyclic compound and the mass percentage of the sulfur double bond-containing compound satisfy $y>f$. The mass percentage of the nitrogen-containing heterocyclic compound is less than the mass percentage of the sulfur double bond-containing compound, which can avoid the problem of impedance deterioration of the electrochemical device caused by the excessive mass percentage of the nitrogen-containing heterocyclic compound.

In an embodiment of this application, the electrolyte further includes at least one of the following aromatic compounds: biphenyl, cyclohexylbenzene, fluorobenzene, or difluorobiphenyl. The aromatic compound can undergo electro-polymerization reactions, and the resulting polymers can block overcharging of the electrochemical device, prevent thermal runaway, and improve the safety performance and overcharge performance of the electrochemical device.

In an embodiment of this application, based on the total mass of the electrolyte, a mass percentage g% of the aromatic compound is g%, where $g<6$, preferably, $0.005 \leq g<6$. For example, the value of g may be 0.0087, 0.01, 0.5, 0.86, 1, 2.55, 3, 4.17, 4.97, 5, 5.75, 5.99, or any one in a range defined by any two of these values. If the mass percentage of the aromatic compound in the electrolyte is too high, the ionic conductivity of the electrolyte is reduced, which affects the migration of lithium ions and leads to poor cycling performance of the electrochemical device. By controlling the mass percentage of the aromatic compound within the foregoing range, it is more conducive to improving the overcharge performance of the electrochemical device and making the overcharge protection effect of the electrochemical device

better.

The electrolyte of this application further includes a non-aqueous solvent. The non-aqueous solvent is not particularly limited in this application, provided that the objectives of this application can be achieved. For example, the non-aqueous solvent may include at least one of a carbonate compound, a carboxylate compound, an ether compound, or other organic solvents. The carbonate compound may be a linear carbonate compound. Examples of the linear carbonate compound include at least one of dimethyl carbonate (DMC), diethyl carbonate (DEC), dipropyl carbonate (DPC), methyl propyl carbonate (MPC), ethyl propyl carbonate (EPC), or methyl ethyl carbonate (EMC). Examples of the carboxylate compound include at least one of ethyl acetate, n-propyl acetate, tert-butyl acetate, methyl propionate, ethyl propionate, or propyl propionate. Examples of the ether compound include at least one of dibutyl ether, tetraethylene glycol dimethyl ether, diethylene glycol dimethyl ether, 1,2-dimethoxyethane, 1,2-diethoxyethane, ethoxymethoxyethane, 2-methyltetrahydrofuran, or tetrahydrofuran. Examples of the other organic solvents include at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphoric acid ester. Based on the mass of the electrolyte, a mass percentage of the non-aqueous solvent ranges from 5% to 70%, for example, 5%, 10%, 15%, 20%, 25%, 30%, 35%, 40%, 45%, 50%, 55%, 60%, 65%, 70%, or any one in a range defined by any two of these values.

The positive electrode of this application further includes a positive electrode current collector. This application has no particular limitation on the positive electrode current collector, provided that the objectives of this application can be achieved. For example, the positive electrode current collector may include aluminum foil, aluminum alloy foil, a composite current collector, or the like. In this application, the positive electrode active material layer may be disposed on one surface of the positive electrode current collector in a thickness direction, or may be disposed on two surfaces of the positive electrode current collector in a thickness direction. It should be noted that the "surface" herein may be an entire region or a partial region of the positive electrode current collector. This application has no particular limitation thereon, provided that the objectives of this application can be achieved. In this application, there is no particular limitation on the thicknesses of the positive electrode current collector and the positive electrode active material layer, provided that the objectives of this application can be achieved. For example, the thickness of the positive electrode current collector ranges from 5 $\mu$m to 20 $\mu$m, preferably from 6 $\mu$m to 18 $\mu$m. A thickness of a one-sided positive electrode active material layer ranges from 30 $\mu$m to 120 $\mu$m. Optionally, the positive electrode may further include a conductive layer. The conductive layer is sandwiched between the positive electrode current collector and the positive electrode active material layer. There is no particular limitation on the composition of the conductive layer, and the conductive layer may be a conductive layer commonly used in the art. The conductive layer includes a conductive agent and a binder.

A negative electrode in this application is not particularly limited, provided that the objectives of this application can be achieved. For example, the negative electrode includes a negative electrode current collector and a negative electrode active material layer. This application has no particular limitation on the negative electrode current collector, provided that the objectives of this application can be achieved. For example, the negative electrode current collector may include copper foil, copper alloy foil, nickel foil, stainless steel foil, titanium foil, foamed nickel, foamed copper, a composite current collector, or the like. The negative electrode active material layer of this application includes a negative electrode active material. This application has no particular limitation on the type of the negative electrode active material, provided that the objectives of this application can be achieved. For example, the negative electrode active material may include at least one of natural graphite, artificial graphite, mesophase microcarbon bead (MCMB), hard carbon, soft carbon, silicon, silicon-carbon composite, $SiO_x$ ($0<x<2$), Li-Sn alloy, Li-Sn-O alloy, Sn, SnO, $SnO_2$, spinel-structured lithium titanate $Li_4Ti_5O_{12}$, Li-Al alloy, or lithium metal. In this application, thicknesses of the negative electrode current collector and the negative electrode active material layer are not particularly limited, provided that the objectives of this application can be achieved. For example, the thickness of the negative electrode current collector is 6 $\mu$m to 10 $\mu$m, and the thickness of the one-sided negative electrode active material layer is 30 $\mu$m to 130 $\mu$m. In this application, the negative electrode active material layer may be disposed on one or two surfaces of the negative electrode current collector in a thickness direction of the negative electrode current collector. It should be noted that the "surface" herein may be an entire region of the negative electrode current collector, or may be a partial region of the negative electrode current collector. This is not particularly limited in this application, provided that the objectives of this application can be achieved. Optionally, the negative electrode may further include a conductive layer. The conductive layer is sandwiched between the negative electrode current collector and the negative electrode active material layer. There is no particular limitation on the composition of the conductive layer, and the conductive layer may be a conductive layer commonly used in the art. The conductive layer includes a conductive agent and a binder.

The conductive agent and the binder are not particularly limited, provided that the objectives of this application can be achieved. For example, the conductive agent may include at least one of conductive carbon black (Super P), carbon nanotubes (CNTs), carbon nanofibers, flake graphite, acetylene black, carbon black, Ketjen black, carbon dots, carbon nanotubes, or graphene. For example, the binder may include at least one of polyacrylic alcohol, sodium polyacrylate, potassium polyacrylate, lithium polyacrylate, polyimide, polyimide, polyamideimide, styrene butadiene rubber (SBR),

polyvinyl alcohol (PVA), polyvinylidene fluoride, polyvinylidene difluoride (PVDF), polytetrafluoroethylene (PTFE), polyvinyl butyral (PVB), water-based acrylic resin, carboxymethyl cellulose (CMC), sodium carboxymethyl cellulose (CMC-Na), or the like.

The electrochemical device of this application further includes a separator, which is used to separate the positive electrode and the negative electrode, prevent internal short circuits of the lithium-ion battery, allow electrolyte ions to pass through freely, and complete the electrochemical charge and discharge processes. The separator in this application is not particularly limited, provided that the objectives of this application can be achieved. For example, the separator is at least one of a polyethylene (PE) and polypropylene (PP)-based polyolefin (PO) separator, a polyester film (for example, a polyethylene terephthalate (PET) film), a cellulose film, a polyimide film (PI), a polyamide film (PA), a spandex or aramid film, a woven film, a non-woven film (non-woven fabric), a microporous film, a composite film, a separator paper, a laminated film, a spinning film, or the like. For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, polyimide, or the like. Optionally, the substrate layer may use at least one of polypropylene porous film, polyethylene porous film, polypropylene non-woven fabric, polyethylene non-woven fabric, or polypropylene-polyethylene-polypropylene porous composite film. Optionally, the surface treatment layer is provided on at least one surface of the substrate layer, and the surface treatment layer may be a polymer layer or an inorganic material layer, or may be a layer formed by a mixture of a polymer and an inorganic material. For example, the inorganic material layer includes inorganic particles and a binder. The inorganic particles are not particularly limited, and for example, may be selected from at least one of aluminum oxide, silicon oxide, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and for example, may be selected from at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and a material of the polymer includes at least one of polyamide, polyacrylonitrile, acrylate polymer, polyacrylic acid, polyacrylate salt, polyvinylpyrrolidone, polyvinyl ether, polyvinylidene fluoride, poly(vinylidene fluoride-hexafluoropropylene), or the like.

The electrochemical device of this application is not particularly limited, and may include any device in which an electrochemical reaction occurs. In some embodiments, the electrochemical device may include but is not limited to a lithium metal secondary battery, a lithium-ion battery (lithium-ion secondary battery), a lithium polymer secondary battery, or a lithium-ion polymer secondary battery.

A process for manufacturing the electrochemical device is well known to persons skilled in the art, and is not particularly limited in this application. For example, the process may include but not is limited to the following steps: stacking a positive electrode, a separator, and a negative electrode in sequence; performing operations such as winding and folding on the stacked product as needed to obtain a wound electrode assembly; and placing the electrode assembly in a packaging case, injecting the electrolyte into the packaging case, and sealing the packaging case to obtain the electrochemical device; or stacking a positive electrode, a separator, and a negative electrode in sequence, then fixing four corners of the stacked structure with tape to obtain a stacked electrode assembly, placing the electrode assembly in a packaging case, injecting the electrolyte into the packaging case, and sealing the packaging case to obtain the electrochemical device. In addition, if necessary, an overcurrent prevention element, a guide plate, and the like may be placed in the packaging case to prevent pressure increase, overcharge, and overdischarge in the electrochemical device.

According to a second aspect, an embodiment of this application provides an electronic device, where the electronic device includes the electrochemical device according to any one of the preceding solutions. The electronic device has good high-temperature storage performance, cycling performance, and overcharge performance.

The electric device of this application is not particularly limited, and may include but is not limited to the following types: a notebook computer, a pen-input computer, a mobile computer, an e-book player, a portable phone, a portable fax machine, a portable copier, a portable printer, a headset, a video recorder, a liquid crystal display television, a portable cleaner, a portable CD player, a mini disc, a transceiver, an electronic notebook, a calculator, a memory card, a portable recorder, a radio, a backup power supply, a motor, an automobile, a motorcycle, an assisted bicycle, a bicycle, a lighting fixture, a toy, a game console, a clock, an electric tool, a flashlight, a camera, a large household storage battery, and a lithium-ion capacitor.

This application provides an electrochemical device and an electronic device including the electrochemical device. The electrochemical device includes a positive electrode, a negative electrode, and an electrolyte, where the positive electrode includes a positive electrode active material layer, the positive electrode active material layer includes a positive electrode active material, the positive electrode active material includes element manganese, and the electrolyte includes a sulfur-oxygen double bond-containing compound. The electrochemical device satisfies $1 \leq \ln(x/y) \leq 4$, where when a voltage of the electrochemical device ranges from 3.75 V to 3.95 V, based on a mass of the positive electrode active

material layer, a mass percentage of the element manganese is x%; and based on a mass of the electrolyte, a mass percentage of the sulfur double bond-containing compound is y%. The electrochemical device has good high-temperature storage performance, and also has good cycling performance and overcharge performance. The electronic device including the electrochemical device also has good high-temperature storage performance, cycling performance, and overcharge performance.

## DESCRIPTION OF EMBODIMENTS

To make the objectives, technical solutions, and advantages of this application clearer and more comprehensible, the following describes this application in detail with reference to embodiments. Apparently, the described embodiments are only some but not all of these embodiments of this application. All other technical solutions obtained by persons of ordinary skill in the art based on these embodiments of this application shall fall within the protection scope of this application.

It should be noted that in specific embodiments of this application, an example in which a lithium-ion battery is used as an electrochemical device is used to illustrate this application. However, the electrochemical device of this application is not limited to the lithium-ion battery.

The following describes some embodiments of this application more specifically by using examples and comparative examples. Various tests and evaluations are performed in the following methods.

### Test **method and device:**

**Cycling performance** test

Room-temperature cycling performance test: The lithium-ion battery was placed in a 25°C thermostat and left standing for 30 minutes, so that the lithium-ion battery reached a constant temperature. The lithium-ion battery that had reached a constant temperature was charged in a constant current of 1C to a voltage of 4.2 V, next charged in a constant voltage of 4.2 V until the current was less than or equal to 0.05C, and then discharged in a constant current of 1C to a voltage of 2.8 V. This was one charge-discharge cycle, and at this point, the thickness of the lithium-ion battery was measured. Using the capacity of the first discharge as 100%, the charge-discharge cycle was repeated until the discharge capacity decayed to 50%, the test was stopped, the number of cycles was recorded, and the thickness of the lithium-ion battery was measured and used as an indicator to evaluate the cycling performance of the lithium-ion battery.

High-temperature cycling performance test: The lithium-ion battery was placed in a 45°C thermostat, and left standing for 30 minutes, so that the lithium-ion battery reached a constant temperature. The lithium-ion battery that had reached a constant temperature was charged in a constant current of 1C to a voltage of 4.2 V, next charged in a constant voltage of 4.2 V until the current was less than or equal to 0.05C, and then discharged in a constant current of 1C to a voltage of 2.8 V. This was one charge-discharge cycle, and at this point, the thickness of the lithium-ion battery was measured. Using the capacity of the first discharge as 100%, the charge-discharge cycle was repeated until the discharge capacity decayed to 50%, the test was stopped, the number of cycles was recorded, and the thickness of the lithium-ion battery was measured and used as an indicator to evaluate the cycling performance of the lithium-ion battery.

**High-temperature** storage test

Full discharge storage test: The lithium-ion battery was placed in a 25°C thermostat and left standing for 5 minutes, charged in a constant current of 1C to 4.2 V, next charged in a constant voltage of 4.2 V until the current was less than or equal to 0.05C, left standing for 5 minutes, discharged in a constant current of 1C to 2.8 V, and then the lithium-ion battery was placed in a 60°C thermostat for 90 days of storage. After 90 days of storage, the lithium-ion battery was taken out and observed, and its thickness change was recorded:

Thickness increase rate = (thickness after high-temperature storage - thickness before high-temperature storage) / thickness before high-temperature storage × 100%.

Full charge storage test: The lithium-ion battery was placed in a 25°C thermostat and left standing for 5 minutes, charged in a constant current of 1C to 4.2 V, next charged in a constant voltage of 4.2 V until the current was less than or equal to 0.05C, left standing for 5 minutes, discharged in a constant current of 1C to 2.8 V, charged in a constant current of 1C to 4.2 V, and then charged in a constant voltage of 4.2 V until the current was less than or equal to 0.05C. After that, the fully charged lithium-ion battery was placed in a 60°C oven for 90 days of storage. After 90 days of storage, the lithium-ion battery was taken out and observed, and its thickness change was recorded:

Thickness increase rate = (thickness after high-temperature storage - thickness before high-temperature storage) / thickness before high-temperature storage × 100%.

3.85V storage test: The lithium-ion battery was placed in a 25°C thermostat and left standing for 5 minutes, charged in a constant current of 1C to 4.2 V, next charged in a constant voltage of 4.2 V until the current was less than or equal to 0.05C, left standing for 5 minutes, and then discharged in a constant current of 1C to 2.8 V. The discharge capacity at this point was recorded. The lithium-ion battery was charged in a constant current of 1C to 3.85 V, and then charged in a constant voltage of 3.85 V until the current was less than or equal to 0.05C. After that, the lithium-ion battery was placed in a 60°C oven for 15 days of storage. After 15 days of storage, the lithium-ion battery was taken out and placed in a 25°C thermostat for 3 hours. The capacity recovery was tested according to the following process: The lithium-ion battery was discharged in a constant current of 1C to 2.8 V, next charged in a constant current of 1C to 4.2 V, charged in a constant voltage of 4.2 V until the current is less than or equal to 0.05C, and then discharged in a constant current of 1C to 2.8 V. The discharge capacity at this point was recorded:

Capacity recovery rate = discharge capacity after high-temperature storage / discharge capacity before high-temperature storage × 100%.

**Direct current resistance (DCR) test**

The lithium-ion battery was placed in a 25°C thermostat and left standing for 5 minutes, next charged in a constant current of 1C to 4.2 V, charged in a constant voltage of 4.2 V until the current was less than or equal to 0.05C, left standing for 30 minutes, discharged in a current of 0.1C for 10 seconds (one site was taken every 0.1 second, and the corresponding voltage value U1 was recorded), and then discharged in a current of 1C for 360 seconds (one site was taken every 0.1 second, and the corresponding voltage value U2 was recorded). Such charging and discharging steps were repeated for 5 times. "1C" refers to a current at which a battery is fully discharged in one hour.

DCR was calculated according to the following formula: R = (U1-U2) / (1C-0.1C). The obtained DCR was the concentration polarization impedance of this application, and was the value measured when the electrochemical device was in a 50% SOC state, that is, 50% SOC DCR, and the unit was milliohms mΩ.

**Overcharge** test

The lithium-ion battery was placed at room temperature for 5 minutes, discharged in a constant current of 1C to 2.8 V, next charged in a constant current of 1C to 4.2 V, charged in a constant voltage of 4.2 V until the current was less than or equal to 0.05C, and then left standing for 30 minutes. After that, the lithium-ion battery was transferred to the overcharge area for testing, charged in a constant current of 1C to 5 V, and charged in a constant voltage of 5 V for 3 hours. The passing standard was that the battery did not burn or explode. For each group, 10 batteries were tested and the number of batteries that pass the test was recorded.

Test **of particle** size **distribution Dv10** of **positive electrode active material**

The MasterSizer 2000 laser diffraction method was used to test the DvlO of the positive electrode active material particles.

**Test of mass percentage of element manganese in positive electrode active material layer**

The lithium-ion battery was disassembled at a voltage of 3.85 V to obtain the positive electrode, and the inductively coupled plasma (ICP) emission spectroscopy was used to test the percentage of the element manganese in the positive electrode active material layer, where the mass percentage of the element manganese was obtained based on the mass of the positive electrode active material layer.

**Example 1-1**

<Preparation of electrolyte>

In an argon atmosphere glove box, the cyclic carbonate compounds EC and DEC were uniformly mixed to produce a base solvent, the lithium salt $LiPF_6$ and the sulfur-oxygen double bond-containing compound PS were added to the base solvent, and the mixture was stirred evenly. Based on the mass of the electrolyte, the mass percentage n% of EC

was 26%, the mass percentage m% of $LiPF_6$ was 11%, the mass percentage y% of PS was 1%, and the remaining part was supplemented with the component DEC.

<Preparation of positive electrode>

A positive electrode active material ($LiNi_{0.85}Co_{0.05}Mn_{0.1}O_2$:$LiFePO_4$:$LiMn_2O_4$=1:1:8 (mass ratio)), a conductive agent conductive carbon black (Super P), and a binder polyvinylidene fluoride (PVDF) were mixed at a mass ratio of 96:2:2, and added with N-methylpyrrolidone (NMP) as a solvent to prepare a slurry with a solid content of 75wt%, and the positive electrode slurry was stirred under an action of a vacuum mixer to obtain a uniform positive electrode slurry. The positive electrode slurry was uniformly applied on one surface of the positive electrode current collector aluminum foil with a thickness of 10 μm, and the aluminum foil coated with the positive electrode slurry was dried at 90°C to obtain a positive electrode with a positive electrode active material layer with a thickness of 110 μm on one side. After the foregoing steps were completed, the single-sided coating of the positive electrode was completed. Then, the foregoing steps were repeated on the other surface of the positive electrode to obtain the positive electrode plate coated with the positive electrode active material on both surfaces. After coating was completed, the positive electrode was cut into a size of 74 mm×867 mm for use. The DvlO of the positive electrode active material particles was 4.8 μm, and the mass percentage x% of the element manganese in the positive electrode active material layer was 51.1%.

<Preparation of negative electrode>

A negative electrode active material artificial graphite, a conductive agent Super P, a thickener sodium carboxymethylcellulose (CMC), and a binder styrenebutadiene rubber (SBR) were mixed at a mass ratio of 95:2:2:1, and added with deionized water as a solvent to prepare into a negative electrode slurry with a solid content of 70wt%, and the negative electrode slurry was stirred under an action of a vacuum mixer to obtain a uniform negative electrode slurry. The negative electrode slurry was evenly applied onto one surface of a negative electrode current collector copper foil with a thickness of 8 μm, and the copper foil coated with the negative electrode slurry was dried at 90°C to obtain a negative electrode having a negative electrode active material coated on one surface, with a negative electrode active material layer of 130 μm in thickness. After the foregoing steps were completed, the single-sided coating of the negative electrode was completed. Then, the foregoing steps were repeated on the other surface of the negative electrode to obtain the negative electrode plate coated with the negative electrode active material on both surfaces. After coating was completed, the negative electrode was cut into a size of 76 mm×851 mm for use.

<Preparation of separator>

A polyethylene (PE) film (provided by Celgard) with a thickness of 14 μm was used.

<Preparation of lithium-ion battery>

The positive electrode, the separator, and the negative electrode prepared above were stacked in order, so that the separator was sandwiched between the positive electrode and the negative electrode for separation, and the stack was wound to obtain an electrode assembly. The electrode assembly was placed into an aluminum-plastic packaging case, and was dehydrated in a vacuum oven at a temperature of 85°C for 12 hours, and the prepared electrolyte was injected therein. After steps such as vacuum packaging, standing, chemical conversion, and shaping, a lithium-ion battery was obtained.

**Example 1-2 to Example 1-22**

Except that the type and mass percentage y% of the sulfur-oxygen double bond-containing compound and the type and DvlO of the positive electrode active material were adjusted according to Table 1, the rest were the same as those in Example 1-1.

**Example 2-1 to Example 2-12**

Except that the mass percentage x% of Mn, the mass percentage m% of the lithium salt $LiPF_6$, and the type and mass percentage n% of the cyclic carbonate compound were adjusted according to Table 2, the rest were the same as those in Example 1-11.

**Example 3-1 to Example 3-6**

Except that the fluorinated carbonate compound was further added in step <Preparation of electrolyte> according to the types and percentages shown in Table 3, the rest were the same as those in Example 1-11.

**Example 4-1 to Example 4-9**

Except that the nitrogen-containing heterocyclic compound was further added in step <Preparation of electrolyte> according to the types and percentages shown in Table 4, the rest were the same as those in Example 3-2.

**Example 5-1 to Example 5-7**

Except that the aromatic compound was further added in step <Preparation of electrolyte> according to the types and percentages shown in Table 5, the rest were the same as those in Example 1-7.

**Comparative Example 1 to Comparative Example 4**

Except that the type and mass percentage y% of the sulfur-oxygen double bond-containing compound and the type of the positive electrode active material were adjusted according to Table 1, the rest were the same as those in Example 1-1.

The preparation parameters and test results of the examples and comparative examples are shown in Table 1 to Table 5 below.

**Table 1**

| | Mass percentage x of Mn in 3.85 V (%) | Sulfur-oxygen double bond-containing compound | | ln(x/y) | Dv10 of positive electrode active material particles D (μm) | D×y | Capacity recovery rate after 15 days of storage in 3.85 V at 60°C (%) | Thickness expansion rate after 90 days of storage at 60°C in 100% SOC (%) |
|---|---|---|---|---|---|---|---|---|
| | | Type | Mass percentage y (%) | | | | | |
| Example 1-1 | 51.1 | PS | 1 | 3.93 | 4.8 | 4.8 | 84.2 | 18 |
| Example 1-2 | 51.3 | PS | 2.5 | 3.02 | 4.8 | 12 | 85.7 | 17 |
| Example 1-3 | 51.3 | PS | 5 | 2.33 | 4.8 | 24 | 85.7 | 18 |
| Example 1-4 | 51.4 | PS | 5.5 | 2.23 | 4.8 | 26.4 | 83.2 | 20 |
| Example 1-5 | 50.8 | MMDS | 2.5 | 3.01 | 4.8 | 12 | 86 | 17 |
| Example 1-6 | 51.4 | PES | 2.5 | 3.02 | 4.8 | 12 | 87.8 | 17 |
| Example 1-7 | 51.3 | PS+MMDS | 0.5+0.5 | 3.94 | 4.8 | 4.8 | 87.3 | 16 |
| Example 1-8 | 51.4 | PS+MMDS | 1.5+1 | 3.02 | 4.8 | 12 | 87.7 | 15 |
| Example 1-9 | 51.3 | PS+MMDS | 2.5+1 | 2.68 | 4.2 | 14.7 | 87.1 | 14 |
| Example 1-10 | 51.6 | PS+PES | 1.5+1 | 3.03 | 4.8 | 12 | 88.9 | 15 |
| Example 1-11 | 57.9 | PS+PES | 1.5+1 | 3.14 | 5.6 | 14 | 86.4 | 15 |
| Example 1-12 | 36.7 | PS+PES | 1.5+1 | 2.69 | 6.3 | 15.75 | 87.5 | 15 |
| Example 1-13 | 36.3 | PS+PES | 0.5+0.5 | 3.59 | 6.3 | 6.3 | 87.3 | 14 |
| Example 1-14 | 36.8 | PS+PES | 3.5+1 | 2.10 | 7 | 31.5 | 87.2 | 16 |

(continued)

| | Mass percentage x of Mn in 3.85 V (%) | Sulfur-oxygen double bond-containing compound | | ln(x/y) | Dv10 of positive electrode active material particles D (μm) | D×y | Capacity recovery rate after 15 days of storage in 3.85 V at 60°C (%) | Thickness expansion rate after 90 days of storage at 60°C in 100% SOC (%) |
|---|---|---|---|---|---|---|---|---|
| | | Type | Mass percentage y (%) | | | | | |
| Example 1-15 | 36.8 | PS+PES | 3.5+1.5 | 2.00 | 7 | 35 | 87.2 | 17 |
| Example 1-16 | 11.7 | PS+PES | 1.5+1 | 1.54 | 7 | 17.5 | 89.1 | 14 |
| Example 1-17 | 11.7 | PS+PES | 2.5+1 | 1.21 | 7 | 24.5 | 84.5 | 17 |
| Example 1-18 | 5.7 | PS+PES | 0.1+0.1 | 3.35 | 2.3 | 0.46 | 82.1 | 18 |
| Example 1-19 | 5.7 | PS+PES | 0.3+0.2 | 2.43 | 2.3 | 1.15 | 86.1 | 15 |
| Example 1-20 | 5.7 | PS+PES | 0.3+0.2 | 2.43 | 7 | 3.5 | 86.9 | 15 |
| Example 1-21 | 5.8 | PS+PES | 0.5+0.5 | 1.76 | 7 | 7 | 87.3 | 14 |
| Example 1-22 | 5.7 | PS+PES | 0.8+0.5 | 1.48 | 7 | 9.1 | 85.8 | 17 |
| Comparative Example 1 | 51.3 | \ | \ | \ | 4.8 | \ | 72.5 | 27 |
| Comparative Example 2 | 51.1 | PS | 0.8 | 4.16 | 4.8 | 3.84 | 75.1 | 25 |
| Comparative Example 3 | 36.7 | PS | 0.6 | 4.11 | 4.8 | 2.88 | 75.4 | 25 |
| Comparative Example 4 | 5.6 | PS | 2.3 | 0.89 | 4.8 | 11.04 | 76.8 | 26 |
| Note: "\" in Table 1 means that there is no corresponding preparation parameter or material. In Example 1-1 to Example 1-10, Comparative Example 1 and Comparative Example 2, $LiNi_{0.85}Co_{0.05}Mn_{0.1}O_2$:$LiFePO_4$:$LiMn_2O_4$=1:1:8 (mass ratio) is used as the positive electrode active material; in Example 1-11, $LiNi_{0.85}Co_{0.05}Mn_{0.1}O_2$:$LiMn_2O_4$=2:8 (mass ratio) is used as the positive electrode active material; in Example 1-12 to Example 1-15 and Comparative Example 3, $LiNi_{0.5}Co_{0.2}Mn_{0.3}O_2$:$LiMn_2O_4$=3:7 (mass ratio) is used as the positive electrode active material; in Example 1-16 and Example 1-17, $LiNi_{0.5}Co_{0.3}Mn_{0.2}O_2$ is used as the positive electrode active material; and in Example 1-18 to Example 1-22 and Comparative Example 4, $LiNi_{0.85}Co_{0.05}Mn_{0.1}O_2$ is used as the positive electrode active material. | | | | | | | | |

It can be seen from Example 1-1 to Example 1-22 and Comparative Example 1 to Comparative Example 4 that the high-temperature storage performance and cycling performance of the lithium-ion battery vary with the value of ln(x/y). The lithium-ion battery with the value of ln(x/y) within the range of this application is selected, and its high-temperature storage performance and cycling performance are significantly better.

The type and mass percentage y% of the sulfur-oxygen double bond-containing compound usually also affect the high-temperature storage performance and cycling performance of the lithium-ion battery. It can be seen from Example 1-1 to Example 1-22 that the lithium-ion battery with the type and mass percentage y% of the sulfur-oxygen double bond-containing compound within the range of this application has good high-temperature storage performance and cycling

performance.

The value of D×y usually also affects the high-temperature storage performance and cycling performance of the lithium-ion battery. It can be seen from Example 1-1 to Example 1-22 that the lithium-ion battery with the value of D×y within the range of this application has good high-temperature storage performance and cycling performance.

**Table 2**

| | Mass percentage x of Mn in 3.85 V (%) | Mass percentage m of $LiPF_6$ (%) | Cyclic carbonate compound | | m/x | x/n | m/n | Capacity retention rate after 400 1C/1C cycles at 45°C (%) | Capacity recovery rate after 15 days of storage in 3.85 V at 60°C (%) |
|---|---|---|---|---|---|---|---|---|---|
| | | | Type | Percentage n (%) | | | | | |
| Example 2-1 | 5.7 | 13.04 | EC | 8.7 | 2.29 | 0.66 | 1.50 | 74.6 | 87.7 |
| Example 2-2 | 5.7 | 13.04 | EC+PC | 8.7+17.39 | 2.29 | 0.22 | 0.50 | 75.8 | 89.3 |
| Example 2-3 | 51.3 | 9.09 | EC+PC+BC | 9.09+9.09+9.09 | 0.18 | 1.88 | 0.33 | 75.7 | 87.4 |
| Example 2-4 | 51.3 | 9.09 | EC+BC | 18.18+9.09 | 0.18 | 1.88 | 0.33 | 75.5 | 87.2 |
| Example 2-5 | 51.3 | 9.09 | EC+PC | 27.27+4.55 | 0.18 | 1.61 | 0.29 | 76.2 | 86.9 |
| Example 2-6 | 51.3 | 9.09 | EC | 36.36 | 0.18 | 1.41 | 0.25 | 76.3 | 86.3 |
| Example 2-7 | 60 | 9.09 | EC | 9.09 | 0.15 | 6.60 | 1.00 | 73.8 | 85.5 |
| Example 2-8 | 51.3 | 13.04 | EC+PC | 8.7+17.39 | 0.25 | 1.97 | 0.50 | 73.5 | 85.7 |
| Example 2-9 | 51.3 | 11.11 | EC+PC | 8.89+17.78 | 0.22 | 1.92 | 0.42 | 74.8 | 86.5 |
| Example 2-10 | 51.3 | 6.98 | EC+PC | 9.3+18.6 | 0.14 | 1.84 | 0.25 | 75.8 | 89.8 |
| Example 2-11 | 51.3 | 5.88 | EC+PC | 9.41+18.82 | 0.11 | 1.82 | 0.21 | 76.4 | 90.3 |
| Example 2-12 | 51.3 | 4.76 | EC+PC | 9.52+19.05 | 0.09 | 1.80 | 0.17 | 76.7 | 90.6 |
| Note: The positive electrode active materials of Example 2-1 and Example 2-2 in Table 2 are the same as those of Example 1-18, the positive electrode active materials of Example 2-3 to Example 2-6 and Example 2-8 to Example 2-12 are the same as those of Example 1-1, and the positive electrode active material of Example 2-7 is $LiMn_2O_4$. | | | | | | | | | |

When the voltage of the electrochemical device ranges from 3.75 V to 3.95 V, the relations between the mass percentage x% of the element manganese, the mass percentage m% of the lithium salt, and the mass percentage n% of the cyclic carbonate compound, that is., m/n, x/n, m/n, usually also affect the high-temperature storage performance and cycling performance of the lithium-ion battery. It can be seen from Example 2-1 to Example 2-12 that the lithium-ion battery with the values of m/n, x/n, m/n within the ranges of this application has good high-temperature storage performance and cycling performance.

**Table 3**

| | Fluorinated carbonate compound | | 0.25×p | y+p | 0.5×n | Capacity retention rate after 800 1C/1C cycles at 25°C (%) | Capacity recovery rate after 15 days of storage in 3.85 V at 60°C (%) |
|---|---|---|---|---|---|---|---|
| | Type | Mass percentage p (%) | | | | | |
| Example 1-11 | \ | \ | \ | 2.5 | 13 | 81.4 | 86.4 |
| Example 3-1 | FEC | 0.0087 | 0.0022 | 2.5087 | 13 | 82.8 | 87.8 |
| Example 3-2 | FEC | 0.43 | 0.1075 | 2.93 | 13 | 86.9 | 89.3 |
| Example 3-3 | FEC | 0.86 | 0.215 | 3.36 | 13 | 86.7 | 88.9 |
| Example 3-4 | FEC | 1.71 | 0.4275 | 4.21 | 13 | 85.8 | 88.7 |
| Example 3-5 | FEC | 4.17 | 1.0425 | 6.67 | 13 | 84.4 | 88.1 |
| Example 3-6 | FEC | 8.01 | 2.0025 | 10.51 | 13 | 82.1 | 87.8 |
| Note: "\" in Table 3 means that there is no corresponding preparation parameter or material. The mass percentage y% of the sulfur-oxygen double bond-containing compound in Example 3-1 to Example 3-6 is 2.5%. | | | | | | | |

The relations of the mass percentage p% of the fluorinated carbonate compound, the percentage y% of the sulfur-oxygen double bond-containing compound, the mass percentage p% of the fluorinated carbonate compound, and the mass percentage n% of the cyclic carbonate compound, that is, the relations between y and 0.25×p and between y+p and 0.5×n usually also affect the cycling performance and storage performance of the lithium-ion battery. It can be seen from Example 1-7 and Example 3-1 to Example 3-6 that the relations between the percentage y% of the sulfur-oxygen double bond-containing compound, the mass percentage p% of the fluorinated carbonate compound, and the mass percentage n% of the cyclic carbonate compound within the ranges of this application, the lithium-ion battery has good cycling performance and storage performance.

**Table 4**

| | Mass percentage g of nitrogen-containing heterocyclic compound (%) | | | | DCR in 50% SOC at 25°C (mΩ) | Thickness expansion rate after storage at 60°C in 0% SOC for 90 days (%) | Capacity recovery rate after 15 days of storage in 3.85 V at 60°C (%) |
|---|---|---|---|---|---|---|---|
| | Pyridine | 2-vinylpyridine | 2-fluoropyridine | Total | | | |
| Example 3-2 | \ | \ | \ | 0 | 30 | 15 | 89.3 |
| Example 4-1 | 0.43 | \ | \ | 0.43 | 32 | 5 | 90.2 |
| Example 4-2 | 0.86 | \ | \ | 0.86 | 36 | 4 | 90.8 |
| Example 4-3 | 1.71 | \ | \ | 1.71 | 41 | 4 | 91 |
| Example 4-4 | 2.54 | \ | \ | 2.54 | 46 | 6 | 89.9 |
| Example 4-5 | \ | 0.43 | \ | 0.43 | 34 | 6 | 89.9 |
| Example 4-6 | \ | \ | 0.43 | 0.43 | 33 | 5 | 89.8 |
| Example 4-7 | 0.26 | 0.086 | \ | 0.346 | 35 | 7 | 89.9 |
| Example 4-8 | 0.26 | \ | 0.086 | 0.346 | 34 | 6 | 89.8 |
| Example 4-9 | 0.087 | 0.087 | 0.087 | 0.261 | 34 | 6 | 89.7 |
| Note: "\" in Table 4 means that there is no corresponding preparation parameter or material. The mass percentage y% of the sulfur-oxygen double bond-containing compound in Example 4-1 to Example 4-9 is 2.5%. | | | | | | | |

It can be seen from Example 3-2 and Example 4-1 to Example 4-9 that the addition of the nitrogen-containing heterocyclic compound to the electrolyte improves the high-temperature storage performance of the lithium-ion battery

containing the electrolyte and reduces the DCR.

The type of the nitrogen-containing heterocyclic compound usually also affects the high-temperature storage performance and DCR of the lithium-ion battery. It can be seen from Example 4-1, Example 4-5, and Example 4-6 that the lithium-ion battery with the type of the nitrogen-containing heterocyclic compound within the range of this application has good high-temperature storage performance and low DCR.

The mass percentage f% of the nitrogen-containing heterocyclic compound and the relation between the mass percentage f% of the nitrogen-containing heterocyclic compound and the mass percentage y% of the sulfur-oxygen double bond-containing compound usually also affect the high-temperature storage performance and DCR of the lithium-ion battery. It can be seen from Example 4-1 to Example 4-9 that the lithium-ion battery with the nitrogen-containing heterocyclic compound within the range of this application has good high-temperature storage performance and low DCR.

**Table 5**

| | Mass percentage g of aromatic compound (%) | | | Capacity retention rate after 400 1C/1C cycles at 45°C (%) | Thickness expansion rate after storage at 60°C in 100% SOC for 90 days (%) | Overcharge test (pass rate/test rate) |
|---|---|---|---|---|---|---|
| | Cyclohexylbenzene | Biphenyl | Total | | | |
| Example 1-7 | \ | \ | 0 | 77.4 | 14 | 6/10 |
| Example 5-1 | 0.0087 | \ | 0.0087 | 77.5 | 14 | 6/10 |
| Example 5-2 | 0.86 | \ | 0.86 | 78.3 | 13 | 8/10 |
| Example 5-3 | 2.55 | \ | 2.55 | 78.7 | 12 | 10/10 |
| Example 5-4 | 4.17 | \ | 4.17 | 77.6 | 12 | 10/10 |
| Example 5-5 | 5.75 | \ | 5.75 | 76.8 | 12 | 10/10 |
| Example 5-6 | \ | 2.55 | 2.55 | 78.5 | 13 | 9/10 |
| Example 5-7 | 3.31 | 1.66 | 4.97 | 77 | 12 | 10/10 |
| Note: "\" in Table 5 means that there is no related preparation parameter or material. | | | | | | |

The type and mass percentage g% of the aromatic compound usually also affect the cycling performance, storage performance, and overcharge performance of the lithium-ion battery. It can be seen from Example 5-1 to Example 5-7 and Example 1-7 that the lithium-ion battery with the heteroaromatic compound within the range of this application has good cycling performance, storage performance, and overcharge performance.

Based on the above analysis, it can be seen that the electrochemical device provided in this application includes a positive electrode, a negative electrode, and an electrolyte, where the positive electrode includes a positive electrode active material layer, the positive electrode active material layer includes a positive electrode active material, the positive electrode active material includes element manganese, and the electrolyte includes a sulfur-oxygen double bond-containing compound. When the electrolyte includes the sulfur-oxygen double bond-containing compound, and the voltage of the electrochemical device ranges from 3.75 V to 3.95 V, the mass percentage y% of the sulfur-oxygen double bond-containing compound in the electrolyte and the mass percentage x% of the element manganese in the positive electrode active material layer satisfy $1 \leq \ln(x/y) \leq 4$, the high-temperature storage performance of the electrochemical device can be effectively improved. Additionally, when at least one of the lithium salt, cyclic carbonate compound, fluorinated carbonate compound, nitrogen-containing heterocyclic compound, or heteroaromatic compound within the range of this application is optionally added to the electrolyte, high-temperature storage performance of the electrochemical device is improved, and cycling performance, safety performance, and overcharge performance of the electrochemical device are also effectively improved.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical device, comprising a positive electrode, a negative electrode, and an electrolyte, wherein the

positive electrode comprises a positive electrode active material layer, the positive electrode active material layer comprises a positive electrode active material, the positive electrode active material comprises element manganese, and the electrolyte comprises a sulfur-oxygen double bond-containing compound; and

the electrochemical device satisfies 1≤ln(x/y)≤4, wherein when a voltage of the electrochemical device ranges from 3.75 V to 3.95 V, based on a mass of the positive electrode active material layer, a mass percentage of the element manganese is x%; and based on a mass of the electrolyte, a mass percentage of the sulfur-oxygen double bond-containing compound is y%.

**2.** The electrochemical device according to claim 1, wherein the electrochemical device satisfies 1.5≤ln(x/y)≤4.

**3.** The electrochemical device according to claim 1, wherein the positive electrode active material particles have a $D_v10$ of D μm, and D and y satisfy 1≤D×y≤31.5, preferably 1≤D×y≤24.

**4.** The electrochemical device according to claim 1, wherein the sulfur-oxygen double bond-containing compound is selected from at least one of a compound represented by formula (I):

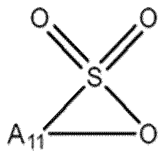

(I),

wherein $A_{11}$ is selected from substituted or unsubstituted $C_1$ to $C_4$ alkylene, substituted or unsubstituted $C_2$ to $C_4$ alkenylene, or substituted or unsubstituted $C_1$ to $C_6$ linear heteroalkylene, the number of heteroatoms in the linear heteroalkylene is 1 to 5, and the heteroatom in the linear heteroalkylene is selected from O, N, P, or S; and

in substitution, each substituent is independently selected from a halogen atom, $C_1$ to $C_3$ alkyl, or $C_2$ to $C_4$ alkenyl.

**5.** The electrochemical device according to claim 1, wherein the sulfur-oxygen double bond-containing compound is selected from at least one of methylene methane disulfonate, 1,3-propane sultone, 1,4-butane sultone, propenyl-1,3-sultone, ethylene sulfate, 1,3-propane disulfonic anhydride, 2-methylbutane sultone, or 1,3-propylene glycol cyclic sulfate; and y≤5.

**6.** The electrochemical device according to claim 1, wherein the electrolyte further comprises a lithium salt and a cyclic carbonate compound, wherein based on the mass of the electrolyte, a mass percentage of the lithium salt is m%, and a mass percentage of the cyclic carbonate compound is n%; and

the electrolyte satisfies at least one of the following conditions (a) to (c):

$$\text{(a) } m/x \leq 2.5;$$

$$\text{(b) } x/n \leq 6.6, \text{ preferably } x/n \leq 1.9;$$

or

$$\text{(c) } m/n \leq 1.5.$$

**7.** The electrochemical device according to claim 6, wherein the electrochemical device satisfies m+y<n.

**8.** The electrochemical device according to claim 6, wherein the lithium salt comprises at least one of lithium hexafluorophosphate, lithium bis(trifluoromethanesulfonyl)imide, lithium bis(fluorosulfonyl)imide, lithium bis(oxalatoborate), lithium tetrafluoroborate, lithium difluorooxalatoborate, lithium perchlorate, or lithium trifluoromethanesulfonate; and 4.5<m<14.

**9.** The electrochemical device according to claim 6, wherein the cyclic carbonate compound comprises at least one of ethylene carbonate, propylene carbonate, or butylene carbonate.

**10.** The electrochemical device according to claim 6, wherein the electrolyte further comprises a fluorinated carbonate compound, wherein based on the mass of the electrolyte, a mass percentage of the fluorinated carbonate compound is p%; and
the electrolyte satisfies at least one of the following conditions (d) to (f):

$$(d)\ y>0.25\times p;$$

$$(e)\ y+p<0.5\times n;$$

or

$$(f)\ p<9.$$

**11.** The electrochemical device according to claim 10, wherein the fluorinated carbonate compound comprises at least one of fluorinated ethylene carbonate, 3,3,3-trifluoropropylene carbonate, bisfluoroethylene carbonate, 2,2,2-trifluoroethyl methyl carbonate, 2,2,2-trifluorodiethyl carbonate, or 2,2,2-trifluoroethyl propyl carbonate.

**12.** The electrochemical device according to claim 1, wherein the electrolyte further comprises a nitrogen-containing heterocyclic compound represented by formula (II):

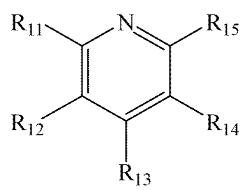

(II),

wherein $R_{11}$, $R_{12}$, $R_{13}$, $R_{14}$, and $R_{15}$ are each independently selected from any one of a hydrogen atom, a halogen atom, a cyano group, substituted or unsubstituted $C_1$ to $C_{10}$ alkyl, substituted or unsubstituted $C_2$ to $C_{10}$ alkenyl, substituted or unsubstituted $C_2$ to $C_{10}$ alkynyl, or substituted or unsubstituted $C_1$ to $C_{10}$ N-containing groups, and in substitution, the substituent is a halogen atom, and any two of Rn, $R_{12}$, $R_{13}$, $R_{14}$, and $R_{15}$ is capable of being bonded to form a ring structure; and
the substituted or unsubstituted $C_1$ to $C_{10}$ N-containing groups comprise substituted or unsubstituted $C_2$ to $C_{10}$ N-containing aromatic group, or substituted or unsubstituted $C_1$ to $C_{10}$ N-containing aliphatic group.

**13.** The electrochemical device according to claim 12, wherein the nitrogen-containing heterocyclic compound is selected from at least one of pyridine, 2-methylpyridine, 2-vinylpyridine, 2-ethynylpyridine, 2-fluoropyridine, 2-cyanopyridine, 3-vinylpyridine, 3-fluoropyridine, 2,6-difluoropyridine, pentafluoropyridine, 2,2'-bipyridine, terpyridine, 1,8-naphthyridine, or 5,6,7,8-tetrahydroquinoline.

**14.** The electrochemical device according to claim 12, wherein based on the mass of the electrolyte, a mass percentage of the nitrogen-containing heterocyclic compound is f%, wherein f<3; and the mass percentage of the nitrogen-containing heterocyclic compound and the mass percentage of the sulfur double bond-containing compound satisfy y>f.

**15.** The electrochemical device according to claim 1, wherein the electrolyte further comprises at least one of the following aromatic compounds: biphenyl, cyclohexylbenzene, fluorobenzene, or difluorobiphenyl; wherein based on the mass of the electrolyte, the mass percentage of the aromatic compound is g%, and g<6.

**16.** An electronic device, comprising the electrochemical device according to any one of claims 1 to 15.

## INTERNATIONAL SEARCH REPORT

International application No.
**PCT/CN2022/075632**

**A. CLASSIFICATION OF SUBJECT MATTER**

H01M 4/36(2006.01)i; H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 东莞新能源, 时代新能源, 锰, 金属, 硫酸, 磺酸, 酯, 溶出, 氮杂环, 吡啶, Mn, manganese, metal, sulfonate, sulfate, sulfone, pyridine

**C. DOCUMENTS CONSIDERED TO BE RELEVANT**

| Category* | Citation of document, with indication, where appropriate, of the relevant passages | Relevant to claim No. |
|---|---|---|
| X | CN 111916706 A (NINGDE CONTEMPORARY AMPEREX TECHNOLOGY CO., LTD.) 10 November 2020 (2020-11-10)<br>description, paragraphs [0002]-[0223] | 1-11, 15-16 |
| Y | CN 111916706 A (NINGDE CONTEMPORARY AMPEREX TECHNOLOGY CO., LTD.) 10 November 2020 (2020-11-10)<br>description, paragraphs [0002]-[0223] | 12-14 |
| Y | CN 111244543 A (SONGSHAN LAKE MATERIALS LABORATORY) 05 June 2020 (2020-06-05)<br>description, paragraphs [0008]-[0096] | 12-14 |
| X | CN 110265632 A (NINGDE CONTEMPORARY AMPEREX TECHNOLOGY CO., LTD.) 20 September 2019 (2019-09-20)<br>description, paragraphs [0004]-[0169] | 1-11, 15-16 |
| A | WO 2017061102 A1 (GS YUASA INTERNATIONAL LTD.) 13 April 2017 (2017-04-13)<br>entire document | 1-16 |

☐ Further documents are listed in the continuation of Box C.　☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 August 2022** | **22 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/075632**

| Patent document cited in search report | | | Publication date (day/month/year) | Patent family member(s) | | | Publication date (day/month/year) |
|---|---|---|---|---|---|---|---|
| CN | 111916706 | A | 10 November 2020 | CN | 111916706 | B | 01 October 2021 |
| CN | 111244543 | A | 05 June 2020 | None | | | |
| CN | 110265632 | A | 20 September 2019 | WO | 2020108014 | A1 | 04 June 2020 |
| | | | | PT | 3686973 | T | 31 August 2021 |
| | | | | ES | 2885348 | T3 | 13 December 2021 |
| | | | | US | 2021083282 | A1 | 18 March 2021 |
| | | | | EP | 3686973 | A1 | 29 July 2020 |
| | | | | CN | 110265632 | B | 01 September 2020 |
| | | | | EP | 3686973 | A4 | 25 November 2020 |
| | | | | EP | 3686973 | B1 | 28 July 2021 |
| WO | 2017061102 | A1 | 13 April 2017 | None | | | |

Form PCT/ISA/210 (patent family annex) (January 2015)